# EUROPEAN PATENT APPLICATION

(11) **EP 3 798 116 A1**
(43) Date of publication of application: **31.03.2021**
(21) Application number: 19199668.5
(22) Date of filing: 25.09.2019
(51) Int. Cl.: B64C 3/18, B64C 3/20

(54) **WING SPAR**

(71) Applicant: Formtech Composites Ltd., Abingdon, Oxfordshire OX14 4SD (GB)
(72) Inventor: Tritschler, Dr. Hans-Joachim, Abingdon, Oxfordshire OX14 4SD (GB)
(74) Representative: Keil & Schaafhausen Patentanwälte PartGmbB

(57) **Abstract**

The invention refers to a wing spar (1) having in a cross-section perpendicular to its longitudinal axis (I) the form of a chamfered square. The spar (1) comprises several plies of a fiber-reinforced resin composite strip (2) of different fiber orientation and at least one outer protruding rib (2) arranged in a plane perpendicular to the longitudinal axis (I).

## Description

The present invention refers to a fiber-reinforced composite wing spar.

In an aircraft, the spar is one of the main structural members of the wing, running spanwise, typically at right angles, to the fuselage of the aircraft. The spar carries flight loads and the weight of the wings while on the ground. Other structural and forming members such as ribs may be attached to the spar or spars. While metal spars are commonly used in aircrafts, modern aircrafts use carbon fiber and Kevlar in the spar construction due to the benefits of high stiffness and low weight.

Currently, the steps in the manufacturing of the spars in a tape winding process are mostly manual. For example, the butt joints are controlled by eye during the layup with very little option for correction. Thus, it is down to the operators feel to apply the tension necessary to yield a result that is visually passing inspection. Feedback from testing is challenging to implement in a consistent reliable manner into the process. As it is down to the operator's subjective in-situ assessment to maintain a set quality, the process becomes most reliable when the operator works within boundaries that come natural to the individual.

In addition, automated tape laying or automated fiber placement processes are known in which an application head is moved around the tool, e.g. a mandrel, or the tool is moved in front of the head in a way that the head needs to follow the contour of the spar. As a result, the curvature has implications on the tape width. That limits the amount of material applied per time on a component like the spars, which are often less than 150 mm in diameter.

Fiber-reinforced composite spars and fuselages are cylinders of differing diameter and amount of plies, yet are similar in relative layup. The main load cases are bending, torsion and a combination thereof. Typically, a spar undergoes catastrophic failure at the point of buckling of the skins. To improve mechanical properties of the spar, some spars have small additional reinforcement rings of unidirectional strips making for rings in uniform spacing along the length to increase the buckling load. However, testing has revealed that the impact of those reinforcements is relatively small since debonding occurs too early.

It is an object of the present invention to reduce weight and costs of a wing spar while maintaining high structural stability.

This object is solved according to claim 9 with an optimized design of a wing spar.

The wing spar is formed by strips consisting of pre-impregnated fiber-reinforced resin. The wing spar has in a cross-section perpendicular to its longitudinal axis the form of a chamfered square wherein the spar comprises several plies of a fiber-reinforced resin composite strip of different fiber orientation and at least one outer protruding rib arranged in a plane perpendicular to the longitudinal axis. The pre-impregnated fiber-reinforced resin composite may comprise unidirectional fibers, e.g. carbon fibers, embedded within a matrix of resin, e.g. an epoxy resin which cures when applying heat. In an embodiment, the spar comprises several outer protruding ribs arranged parallel to each other and spaced from each other along the longitudinal axis. The chamfered square of the spar may have a diameter of less than 150 mm with rounded edges having a radius of less than 40 mm.

The spar is subject to bending and torsion when in use in an airplane wing. Bending would require an I-beam as preferred shape whereas torsion would require a cylinder shape. A box shape is already a step towards each other, but still favouring bending. The shape of a chamfered square, also comprising a radius on all four sides, further improves the resistance to bending, torsion and a combination thereof. One or more outer protruding rib(s) result in an increased resistance to buckling and are preferred over much smaller and less strong reinforcement rings.

A non-limiting, exemplary embodiment of the invention will now be described with reference to the accompanying drawing, in which:

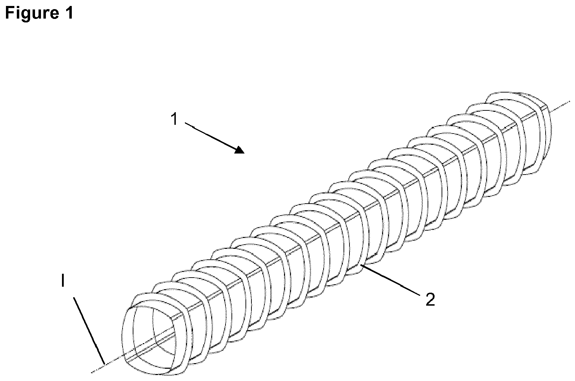

Figure 1 schematically shows a wing spar according to the invention.

Figure 1 shows a spar 1 according to an exemplary embodiment of the invention. The spar 1 depicted in Figure 1 has a cross-section in the form of a chamfered square with rounded corners. This box shape combines the benefits of an I-beam for withstanding bending loads and a cylinder for withstanding torsion loads.

In addition, the spar 1 is provided with several outer flange-like ribs 2 extending substantially perpendicular to the central axis I of the spar 1. The ribs 2 are equally spaced from each other along the length of the spar 1. The ribs 2 increase the resistance of the spar 1 to buckling. Generally, it is preferred if the ribs 2 are attached to the spar 1 after its production.

## Claims

1. Wing spar (1) having in a cross-section perpendicular to its longitudinal axis (I) the form of a chamfered square wherein the spar (1) comprises several plies of a fiber-reinforced resin composite strip (2) of different fiber orientation and at least one outer protruding rib (2) arranged in a plane perpendicular to the longitudinal axis (I).

2. Wing spar (7) according to claim 1 comprising several outer protruding ribs (2) arranged parallel to each other and spaced from each other along the longitudinal axis (I).

3. Wing spar (7) according to claim 1 or 2, wherein the chamfered square has a diameter of less than 150 mm with rounded edges having a radius of less than 40 mm and may have a radius on all sides instead of flat surfaces.
